# EUROPÄISCHE PATENTSCHRIFT

(11) **EP 0 630 019 B1**
(45) Veröffentlichungstag und Bekanntmachung des Hinweises auf die Patenterteilung: **16.12.1998**
(21) Anmeldenummer: 94106725.8
(22) Anmeldetag: 29.04.1994
(51) Int. Cl.: G11B 23/03, G11B 23/033

(54) **Kassette für Datenträgerplatten**
Cartridge for data discs
Cassette pour disques de données

(30) Priorität: 18.06.1993 DE 9309103 U
(43) Veröffentlichungstag der Anmeldung: 21.12.1994
(73) Patentinhaber: CARTONNERIES DE THULIN S.A., B-7350 Thulin (BE)
(72) Erfinder: Lammerant, Henri, B-7350 Thulin (BE); Lammerant, Filip, B-7350 Thulin (BE)
(74) Vertreter: Stenger, Watzke & Ring Patentanwälte

(56) Entgegenhaltungen:
- WO-A-94/29869
- DE-A- 3 725 616
- DE-A- 4 116 344
- FR-A- 2 677 480

## Beschreibung

Die Erfindung betrifft eine Kassette für Datenträgerplatten. Derartige Kassetten finden beispielsweise Anwendung zur Aufbewahrung und zum Vertrieb sogenannter CD's. Die Kassetten sind als Gehäuse ausgebildet und das Basisteil und Deckel sind in der Regel aus durchsichtigem Kunststoff, wohingegen der Plattenhalter, welcher in das Basisteil einsetzbar ist, in der Regel aus dunkelfarbigem Kunststoff hergestellt ist. Es sind eine Vielzahl unterschiedlicher Ausführungsformen derartiger Kassetten bekannt, welche jedoch alle sehr ähnlich aufgebaut sind. Meist weist das Basisteil einen flachen, rechteckigen Boden und vier Wände auf.

In diese Basis ist der Plattenhalter einsetzbar. Zwischen Plattenhalter und Basisteil kann ein bebildertes Titelblatt eingelegt werden, das sich auf die Platte bezieht. Dieses Blatt läuft in der hinteren und der vorderen Wand entlang, damit man den Titel an den Rändern der eingeordneten Kassette ablesen kann.

Der Deckel weist überlicherweise ebenfalls eine rechteckige, annähernd quadratische obere Wand auf, die etwas kürzer ist als das Basisteil. Zwei Seitenwände stehen auf dieser Wand und erstrecken sich nach hinten, wobei sie elastische Arme mit Drehzapfen bilden, die in entsprechende Löcher im hinteren Teil des Basisteils eingreifen und eine Achse zum Verschwenken des Deckels gegenüber dem Basisteil bilden. Auf diese Weise kann der Deckel geschlossen oder 180° weit geöffnet werden.

Auch an den Seitenwänden des Deckels sind klein, halbkreisförmige, nach innen vorspringende Laschen angeordnet, so daß sich zwischen die Laschen und der oberen Deckelwand ebenfalls Titelseiten, Informationsblätter und dgl. einschieben lassen.

Die Ausführungsformen der vorbekannten Kassetten unterscheiden sich in der Regel durch konstruktive Unterschiede zur Veränderung der Aufnahmekapazität. Dabei sind jeweils unterschiedliche Anordnungen von Basisteilen, Deckeln und Plattenhaltern vorgeschlagen. Der Plattenhalter ist ein im wesentlichen rechteckiges Formteil, welches in das Basisteil einsetzbar ist. In der Mitte des Plattenhalters befindet sich eine dem Mittelloch der Platte entsprechende Bohrung. Konzentrisch zu dieser Bohrung ist eine wenig erhöhte kleine Scheibe vorgesehen, die eine Stützfläche für den kreisförmigen Innenbereich der Platte bildet, der keine Informationen trägt.

Auf diese Weise schwebt der gesamt mit Informationen besetzte Bereich frei in der kreisförmigen Aufnahme des Plattenhalters, so daß jeder Kontakt und jede Reibungsberührung zwischen den Aufzeichnungen auf der Platte und der Verpackung ausgeschlossen wird. Um das Mittelloch herum sind Segmentausschnitte angeordnet, an denen sich Haken befinden, die an dem Rand der Bohrung der Platte einrasten können.

Für die Aufnahme mehrerer CD's wurden Mehrplattenkassetten vorgeschlagen. Derartige Mehrplattenkassetten sind beispielsweise bekannt aus der EP-A-144 631, EP-A 420 350 und dem DE-U-92 01 879.

Bei allen vorbekannten Kassettentypen sind an dem Deckel die zwei Seitenwände nach hinten erstreckt und bilden elastische Arme mit Drehzapfen, die, leicht auseinandergebogen, aufgrund der Elastizität in entsprechende Löcher in den Seitenwänden des Basisteils eingreifen und so eine Achse zum Verschwenken des Deckels gegenüber dem Basisteil bilden.

Für den Vertrieb der vorbekannten CD-Kassetten ist es erforderlich, eine Originalitätssicherung vorzusehen, um sicherzustellen, daß der Kunde auch eine ungeöffnete CD-Kassette erwirbt, bzw. um sicherzustellen, daß die vor Anbringen der Originalitätssicherung einliegende CD auch nach wie vor noch in der Kassette liegt. Derartige Originalitätssicherungen dienen selbstverständlich auch als Diebstahlsicherungen. Während bisher die gesamten CD's in eine Zellophanverpackung eingeschweißt wurden, hat sich in der neueren Zeit zu Zwecken der geringeren Umweltbelastung eine andere Art der Originaltätssicherung durchgesetzt. Diese besteht aus einer Banderole in Form eines schmalen Bandes, welches einmal so um die CD gelegt wird, daß diese sich nicht mehr aufklappen läßt. Zu diesem Zweck wird die Banderole eng um die CD gelegt und die Enden verbunden, so daß sich parallel zur Schwenkachse auf der Deckeloberseite und der Basisunterseite das Banderolenband erstreckt. Alternativ wird auch eine quer zur Schwenkachse auf die Deckeloberseite und die Basisunterseite aufgeklebte Banderole verwendet.

Während sich die vorbekannte Banderole zu Zwecken der Originalitätssicherung vor allem auch unter Berücksichtigung von Umweltgesichtspunkten bewährt hat, stellt sie jedoch keine ausreichende Diebstahlsicherung dar. Durch den Aufbau der Schwenkverbindung zwischen Deckel und Basisteil ist es möglich, trotz angebrachter Banderole die beiden mit Drehzapfen versehenen elastischen Arme des Deckels von dem Basisteil wegzudrücken und den gesamten Deckel relativ zum Basisteil zu verschieben, ohne daß der Deckel vom Basisteil besonders angehoben erden muß. Die Banderole wird dabei nicht beschädigt. Die CD ist aus den ausreichend gegeneinander verschobenen Teilen entnehmbar und der Deckel, nachdem er wieder in seiner Ausgangsposition zurückgeschoben wurde, mit den Drehzapfen an den elastischen Armen wieder in die entsprechenden Löcher im Basisteil einsetzbar. Aufgrund der im Deckel und im Basisteil angeordneten Informations- und Titelblätter kann man nun von außen trotz angeordneter Banderole nicht erkennen daß die Kassette leer ist oder eine nicht gewünschte CD enthält.

In der gemäß Artikel 54 (3) EPÜ zum Stand der Technik zählenden WO 94/29869 ist ebenfalls eine Kassette z. B. für CD's beschrieben, die sich aus einem Basisteil, einem hierzu schwenkbaren Deckel und einem in das Basisteil eingesetzten Plattenhalter-Teller zusammensetzt. In einer Einsenkung auf der Oberseite dieses Plattenhalter-Tellers läßt sich mittels der üblichen Klemmelemente eine CD befestigen. Zur scharnierartigen Verbindung zwischen Deckel und Basisteil sind an dem Deckel zwei in Fluchtung zueinanderliegende Drehzapfen ausgebildet, welche in Zapfenlöcher des Basisteils eingreifen. An ihren freien Enden sind die Zapfen mit radialen Erweiterungen versehen, so daß sich die mit den Zapfen versehenen Wandteile des Deckels nicht so weit aufbiegen lassen, daß die Zapfen wieder aus dem jeweiligen Zapfenloch heraustreten. Um gleichwohl bei der Montage der Kassette den Zapfen in das Zapfenloch des Basisteils einführen zu können, ist das Zapfenloch schlüssellochförmig gestaltet und mit einem zusätzlichen Einschubschlitz versehen. Durch den Einschubschlitz hindurch läßt sich der Zapfen in das Zapfenloch hineindrücken. Wird anschließend der Plattenhalter-Teller in das Basisteil eingesetzt, legt sich eine Kante des Plattenhalter-Tellers über den Zapfen und hindert ihn daran, wieder aus dem Zapfenloch auszutreten.

Der Erfindung liegt ausgehend von dem vorveröffentlichten Stand der Technik die **Aufgabe** zugrunde, bei einer Kassette für Datenträgerplatten ein mißbräuchliches Lösen der Schwenkachsenverbindung zwischen Deckel und Basisteil bei verschlossener Kassette zu verhindern.

Zur **Lösung** wird erfindungsgemäß eine Kassette für Datenträgerplatten mit den folgenden Merkmalen vorgeschlagen:
a) einem Gehäuse zur Unterbringung von zwei Datenträgerplatten, welches sich aus einem Basisteil und einem Deckel zusammensetzt, die jeweils eine im wesentlichen flache, rechteckige Grundplatte aufweisen, an deren seitlichen Rändern Seitenwände angeordnet sind,
b) einem über einen Drehzapfen mit dem Basisteil verbundenen, anhebbar in dem Gehäuse angeordneten Plattenhalter-Teller,
c) einer Deckel und Basisteil schwenkbar zueinander verbindenden Schwenkachse, die dadurch gebildet ist, daß an gegenüberliegenden Seitenwänden des Basisteils oder des Deckels Drehzapfen ausgebildet sind, welche in Zapfenlöcher eingreifen, die in den entsprechenden Seitenwänden am jeweils anderen Teil ausgebildet sind,
d) die Länge des Deckel und Basisteil verbindenden Drehzapfens ist größer als die Dicke der das Zapfenloch aufweisenden Seitenwand,
e) am freien Ende des Drehzapfens ist eine radiale Vergrößerung ausgebildet, deren Durchmesser größer ist als der des Zapfenlochs,
f) von der freien Oberkante der das Zapfenloch aufnehmenden Seitenwand bis zum Zapfenloch ist ein Einschubschlitz für den Drehzapfen angeordnet.

Die nach der Erfindung aufgebaute Kassette bietet Platz für insgesamt zwei Datenträgerplatten, die von beiden Seiten her an der rechteckigen Grundplatte befestigbar sind. Deckel und Basisteil sind relativ zueinander verschwenkbar, wobei an einem Teil im Bereich der Seitenwände Drehzapfen ausgebildet sind, und an dem jeweils anderen Teil an den entsprechenden Seitenwänden Zapfenlöcher ausgebildet sind. Allerdings werden die Drehzapfen nicht in axialer Richtung in die Zapfenlöcher eingeführt, indem die die Drehzapfen tragenden Seitenwände elastisch ausgebildet sind, sondern die Drehzapfen werden in die Zapfenlöcher derart eingesetzt, daß sie von der freien Kante der die Zapfenlöcher aufweisenden Seitenwand entlang des Einführungsschlitzes bis in das Zapfenloch eingesetzt werden. Aufgrund der am freien Zapfenende ausgebildeten radialen Vergrößerung ist es nunmehr nicht mehr möglich, den Drehzapfen in axialer Richtung aus dem Zapfenloch herauszuziehen.

Damit ist es nunmehr nicht mehr möglich, ohne Zerstörung der Kassette diese in geschlossenem Zustand, in welchem sie durch eine Banderole gesichert wird, unbemerkt zu öffnen.

Mit Vorteil wird weiterhin angegeben, daß der Einführungsschlitz für die Drehzapfen V-förmig ist. Dabei wird vorgesehen, daß der V-förmige Einführungsschlitz an der freien Seitenwandoberkante in etwa eine Breit aufweist, die dem Durchmesser des Drehzapfens entspricht, zum Loch hin jedoch etwas verjüngt. Der Drehzapfen wird also in radialer Richtung unter Ausnutzung der Elastizität der Seitenwand von deren freien Kante über den V-förmigen Einführungsschlitz eingedrückt, bis er in dem Zapfenloch eingesetzt ist. Aufgrund der Seitenwandelastizität bleibt er in dem Zapfenloch verrastet und kann nicht mehr ohne weiteres nach oben entnommen werden.

Es versteht sich von selbst, daß hier viele Alternativen denkbar sind, beispielsweise ein abgeflachter Zapfen, welcher in einer bestimmten Stellung in einen geraden Einführungsschlitz einsetzbar ist und dgl.

Mit Vorteil wird weiterhin angegeben, daß die radiale Vergrößerung am freien Ende des Drehzapfens eine konzentrische Scheibe ist. Diese hat einen Durchmesser, der größer ist als das jeweilige Zapfenloch, so daß der Drehzapfen nicht mehr in axialer Richtung aus dem Zapfenloch herausziehbar ist.

Selbstverständlich können anstelle der Scheibe auch Knebel, Rastnocken und dgl. verwendet werden.

Mit Vorteil wird weiterhin angegeben, daß der Drehzapfen an seinem hinter der radialen Vergrößerung liegenden freien Ende einen Auflagerzapfen aufweist. Diese in Axialrichtung vorgesehene weitere Verlängerung des Drehzapfens ermöglicht, daß eine im Gehäuse, gemäß einer weiteren vorteilhaften Ausgestaltung der Erfindung am Plattenteller ausgebildete Anschlagfläche bei verschlossener Kassette auf dem Auflagerzapfen aufliegt. Damit wird weiterhin verhindert, daß der Drehzapfen durch einfaches Anheben relativ zum Zapfenloch in Richtung der freien Seitenwandkante abgezogen werden kann.

Dies ist nur dann möglich, wenn das den Anschlag tragende Bauteil in einer geöffneten Position liegt.

Weitere Vorteile und Merkmale der Erfindung ergeben sich aus der folgenden Beschreibung anhand der Figuren. Dabei zeigen:
- Fig. 1: eine schematische perspektivische Ansicht einer CD-Kassette in montiertem, geöffnetem Zustand;
- Fig. 2: eine CD-Kassette gemäß Fig. 1, welche die Kassette in einem in die drei Hauptteile zerlegten Zustand zeigt;
- Fig. 3a: eine Draufsicht auf einen Teil des Deckels;
- Fig. 3b: eine Seitenansicht gemäß Fig. 3a;
- Fig. 4: eine Seitenansicht auf einen Abschnitt des Basisteils;
- Fig. 5a: eine Draufsicht auf einen Abschnitt auf die geschlossene Kassette;
- Fig. 5b: eine Seitenansicht gemäß Fig. 5a und
- Fig. 6: eine Vergrößerung gemäß Fig. 5b des Teils der Kassette, an welchem die Schwenkachse ausgebildet ist.

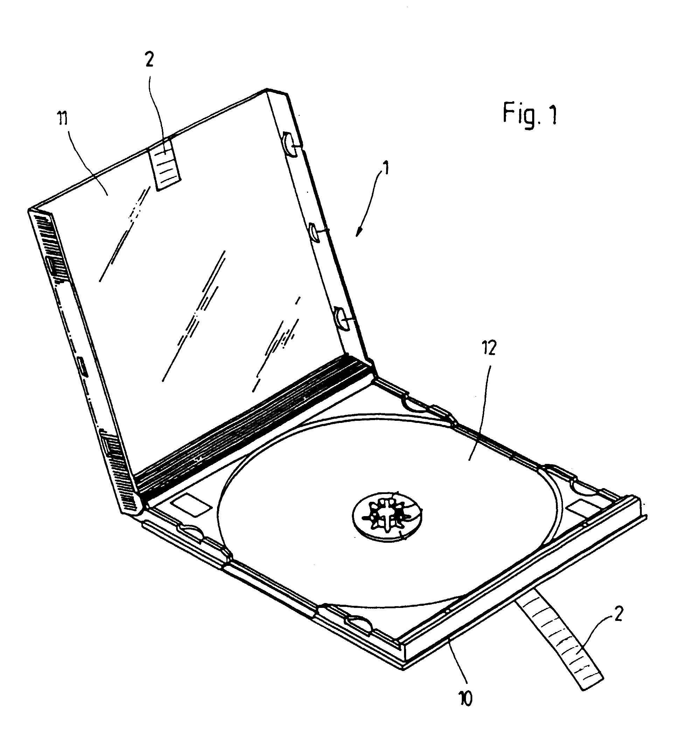

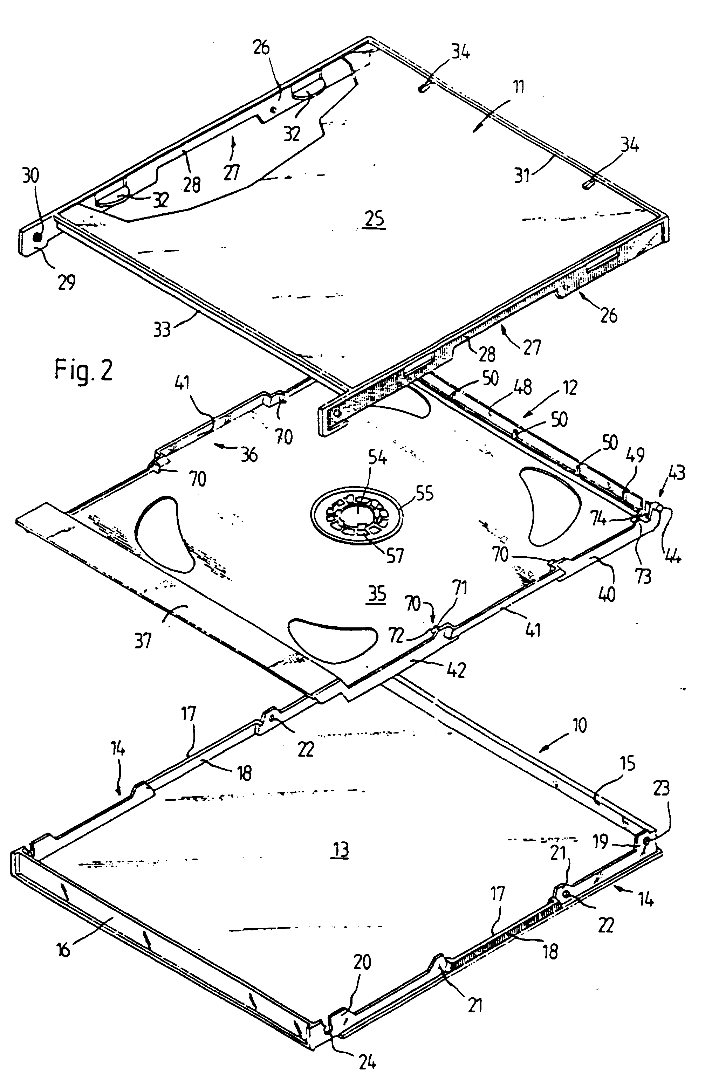

Die in den Figuren 1 und 2 gezeigte Kassette 1 besteht aus drei Hauptteilen; dem Basisteil 10, dem Deckel 11 und dem Plattenhalter-Teller 12. Der Teller 12 ist bei dem gezeigten Ausführungsbeispiel vorne an dem Basisteil 10 angelenkt und wird in das Basisteil 10 hineingeklappt, während der Deckel 11 hinten an dem Basisteil angelenkt ist und auf die Außenseite des Basisteils geklappt wird. Eine verschlossene Kassette wird mit einer wie in Fig. 1 gezeigten Banderole 2 gesichert, indem diese nach Verschließen der Kassette 1 an dieser befestigt wird, daß sie nur noch unter Zerstörung der Banderole gelöst werden kann.

Das in Figur 2 dargestellte Basisteil 10 umfaßt einen flachen rechteckigen Boden 13, zwei Seitenwände 14, eine Stirnwand 15 und eine Rückwand 16. Die Seitenwände 14 weisen in ihrer Mitte Ausschnitte 17 auf. Längs dieses Ausschnittes 17 verläuft eine niedrigere Verstärkungsrippe 18, die an der Außenseite jeder Seitenwand 14 überlappt. An dem vorderen Ende 19 und dem hinteren Ende 20 und neben dem Ausschnitt 17 (Erhöhung 21) sind die Seitenwände 14 hochgezogen. Die Erhöhungen 21 längsseits der Rippe 18 sind zur Erhöhung der Stabilität zur Mitte hin abgeschrägt. Die vordere mittlere Erhöhung 21 weist eine Öffnung 22 mit Führungskerben für das Einführen eines Vorsprungs des Deckels 11 auf, um diesen an der Außenseite des Basisteils in heruntergeklappter Lage festzuhalten. Die vorderen Erhöhungen 19 besitzen Gelenköffnungen 23 mit konischer Führungskerbe für das Einführen des Drehzapfens des Plattenhalters 12, um diesen verschwenken zu können. Andererseits besitzen auch die hinteren Erhöhungen 20 Gelenköffnungen 24 mit konischen Führungskerben für das Einführen der Drehzapfen hinten an dem Deckel 11, so daß dieser verschwenkbar ist. Auf den Boden 13 des Basisteils 10 kann man ein bebildertes Titelblatt legen, das nach vorn und nach hinten gefaltet ist, um den Titel kleingedruckt an den Rändern 15,16 der Kassette erscheinen zu lassen. Um diese Ränder vor dem Zerkratzen zu schützen, sind sie gegenüber dem Boden etwas zurückgenommen. Die Stirnwand 15 ist niedriger als die Rückwand 16, um das Herumschwenken des Tellers 12 um mindestens 180° zu erleichtern.

Der in Figur 2 dargestellte Deckel 11 weist eine flache rechteckige obere Wand 25 auf, die annähernd quadratisch ist, denn ihre Länge ist geringer als die des Basisteils 10. Sie besitzt zwei Seitenwände 26, die in der Mitte Ausschnitte 27 aufweisen, so daß eine Verstärkungsrippe 28 verbleibt. Die Seitenwände 26 ragen nach hinten über die obere Wand 25 des Deckels 11 hinaus, um praktisch die gleiche Länge wie die Seitenwände 14 des Basisteils 10 zu erreichen. Diese Verlängerungen bilden Arme 29 und sind mit Drehzapfen 30 versehen, die in die Gelenköffnungen 24 am hinteren hochgezogenen Ende 20 der Seitenwand 14 des Basisteils 10 eingreifen sollen. Um die Kassette schließen zu können, springen die Seitenwände 14 des Basisteils 10 auf dem Boden 13 etwas zurück. Die Seitenwände 26 des Deckels 11 schließen somit die Seitenwände 14 des Basisteils 10 ein und liegen gleichzeitig auf dem schmalen Rand des Bodens 13 des Basisteils 10 auf, der durch das Zurückspringen seiner Wände 14 freigegeben ist. Der stirnseitige Rand des Deckels 11 zeigt einen kleinen niedrigen Streifen 31 als Stirnwand. Diese kleine Stirnwand 31 des Deckels 11 liegt auf dem oberen Rand der Stirnwand 15 des Basisteils 10 auf. Der Deckel weist nach innen gerichtete Laschen 32 auf, die einen gewissen freien Zwischenraum entstehen lassen, in welchen ein Heftchen mit bebildertem Deckblatt geschoben werden kann. Dieses Heftchen wird hinten von einem Streifen 33 gleicher Dicke als Rückwand gehalten. Vorn wird es durch kleine konische Vorsprünge 34 gehalten.

Der Plattenhalter-Teller 12, der ebenfalls in Figur 2 dargestellt ist, weist eine rechteckige Tafel 35 auf, die an jeder Seite im Mittelbereich einen seitlichen Vorsprung 36 besitzt. Wenn die Kassette geschlossen ist, greifen die Vorsprünge 36 in die Mittelausschnitte 17,27 der Seitenwände 14,26 des Basisteils 10 und des Deckels 14 ein. Der hintere Abschnitt der Tafel 35 weist einen nach oben versetzten Streifen 37 auf, der bei geschlossener Kassette auf dem oberen Rand der Rückwand 16 des Basisteils 10 ruht. Durch die Position dieses Streifens 37 wird das Gelenk 24-30 des Deckels 11 freigehalten. Um ein Einsinken des Streifens 37, etwa durch einen Fingerdruck auf die Mitte, zu verhindern, ist der Streifen in der Mitte der dem Basisteil 10 zugewandten Seite mit einem Fuß und ggf. mit zusätzlichen vertikalen Laschen versehen. Der Streifen 37 besitzt weiterhin zwei kleine horizontale Laschen, um das Absinken des hinteren Randes des Deckels 11 zu verhindern.

Der Plattenhalter-Teller 12 besitzt vertikale Verstärkungsrippen 40,41,42. Die vordere Rippe 40 und die hintere Rippe 42 zeigen (bei geschlossener Kassette) in Richtung auf das Basisteil 10, während die Rippe 41 gegen den Deckel 11 gerichtet ist und dem Rand des seitlichen Vorsprungs 36 der Tafel 35 folgt. Diese Anordnung der Verstärkungsrippen 40,41,42 bedeutet eine erhebliche Verstärkung der gesamten Telleranordnung 12 und erteilt ihr eine ausreichende Eigensteifigkeit und Biegefestigkeit. Daher kann die Tafel 35 des Tellers 12 aus einer dünneren Folie hergestellt werden. Zum Beispiel kann diese Folie eine Dicke von 1,2 mm erhalten, im Vergleich zu Tafeln nach dem Stande der Technik, die eine Dicke von 1,5 mm haben würden, was eine Materialeinsparung von 20% darstellt. Außerdem wird durch die Verringerung der Dicke Raum für die Unterbringung von zwei Schallplatten gewonnen.

Der stirnseitige Rand des Tellers 12 ist ebenfalls verstärkt, insbesondere durch eine zum Basisteil 10 gerichtete (untere) Rippe und eine zum Deckel 11 gerichtete (obere) Rippe 48. Die untere Rippe ist gegenüber der oberen Rippe 48 zur Mitte des Tellers hin um ein Stück versetzt, das im wesentlichen der Dicke der Rippen 48 entspricht, so daß beim Stapeln die untere Rippe des obenliegenden Tellers 12 sich neben die obere Rippe 48 des untenliegenden Tellers 12 legt.

Außerdem ist der rückwärtige untere Rand durch eine Vertikalrippe verstärkt. Diese Verstärkungsrippen der Ränder des Tellers 12 verleihen diesem eine gute Biegefestigkeit.

Zudem sind in Fig. 2 Flügel 70 zu erkennen, die in der Ecke angeordnet sind, die von der Tafel 35 und den Seitenrippen 41 gebildet sind, die an dem Mittelabschnitt der Seitenränder des Tellers vorgesehen sind. Diese Flügel 70 zeigen in die Mitte des Tellers 12, senkrecht zu dessen Seitenrändern. Sie besitzen einen freien waagerechten Rand 71, der in der gleichen Ebene liegt wie der obere freie Rand der zentralen Seitenrippen 41, und einen freien Schrägrand 72, der sich von dem freien waagerechten Rand 71 zu der Tafel 35 des Tellers 12 senkt.

Die Flügel 70 sollen das Wiederausrichten von zwei Tellern 12 erleichtern, die sich etwa seitlich versetzt aufeinandergelegt haben. Ein einfacher seitlicher Druck auf den seitlich versetzten Teller 12 ermöglicht es nämlich dem unteren Rand der Seitenrippen 40,42 dieses Tellers 12, auf dem Schrägrand 72 der Flügel 70 des untenliegenden Tellers 12 entlangzulaufen und sich richtig auf den oberen Rand der zentralen Seitenrippen des untenliegenden Tellers 12 auszurichten. Ohne die Flügel 70 würden die Seitenrippen 40,42 des obenliegenden Tellers 12 gegen die Seitenrippen 41 des untenliegenden Tellers 12 stoßen.

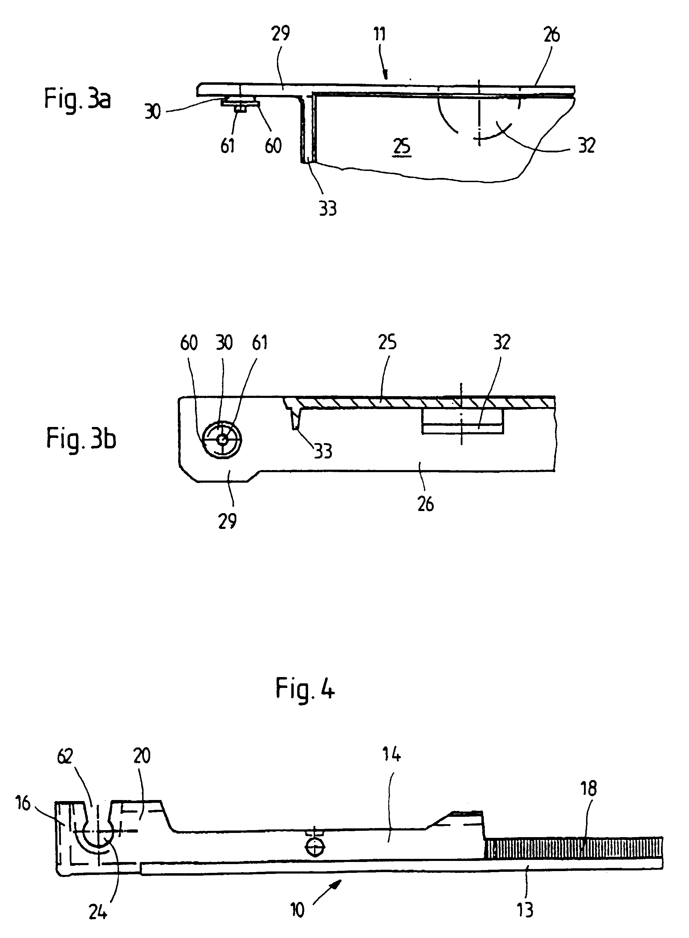

Bei dem in Fig. 3a gezeigten Abschnitt des Deckels 11 ist der erfindungsgemäße Aufbau des Drehzapfens zu erkennen. Die Seitenwand 26 erstreckt sich freistehend nach hinten und bildet den elastischen Teil 29, an welchem der Drehzapfen 30 angeordnet ist. Dieser weist an seinem freien Ende eine radiale Vergrößerung in Form einer konzentrischen Scheibe 60 auf, an welche sich weiter zum axialen freien Ende des Drehzapfens 30 ein Auflagerzapfen 61 anschließt. Es versteht sich von selbst, daß dieser Drehzapfenaufbau nach beliebigen herkömmlichen Methoden hergestellt werden kann. Er kann aus montierten Einzelteilen bestehen oder als einstückiges Spritzgußteil am Deckel 11 angeformt sein. Fig. 3b zeigt eine Draufsicht auf den so gebildeten Zapfen.

Wie in Fig. 4 zu sehen, ist an einem hinteren Ende der Seitenwand 14 des Basisteils 10 in an sich bekannter Weise die Gelenköffnung 24 ausgebildet. Es handelt sich dabei um eine die Seitenwand 14 im hinteren Bereich 20 durchdringende Bohrung. Von der freien Oberkante des hinteren Endes 20 der Seitenwand 14 ist eine Einschubkerbe oder ein Einschubschlitz 62 ausgebildet. Im gezeigten Ausführungsbeispiel ist der Einschubschlitz 62 V-förmig. An der freien Oberkante des hinteren Teils 20 der Seitenwand 14 weist der Einschubschlitz 62 eine Breite auf, die im wesentlichen dem Durchmesser des Zapfenloches 24 entspricht. Zum Zapfenloch hin verjüngt sich der Einschubschlitz 62, so daß ein entsprechender Drehzapfen unter Federbelastung in das Zapfenloch 24 eindrückbar ist.

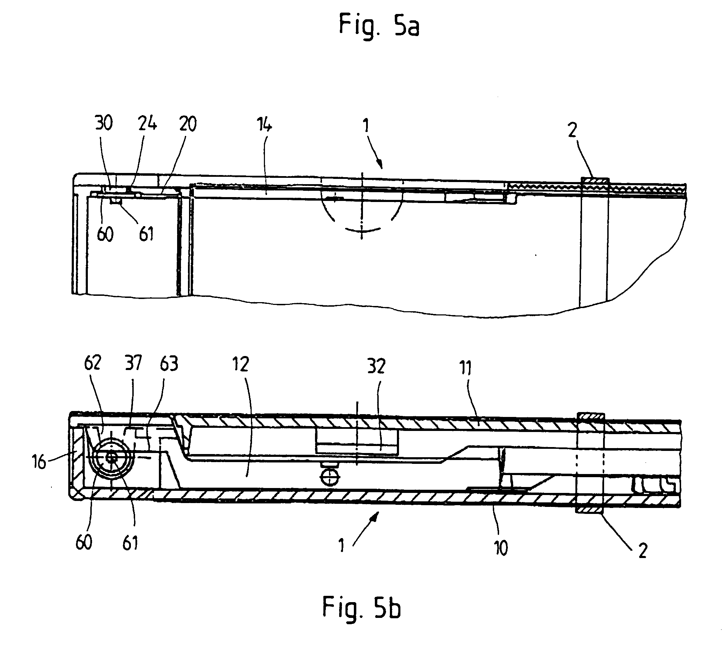

Fig. 5a und 5b zeigen nun den entsprechenden Teil einer montierten und geschlossenen Kassette 1. Diese ist im gezeigten Ausführungsbeispiel durch eine Banderole 2 gesichert, welche als endloses, flaches Band die Kassette 1 umgreift.

Der Drehzapfen 30 ist über den Einschubschlitz 62 in das Zapfenloch eingesetzt. Die konzentrische Scheibe 60 liegt nunmehr an der Innenseite des hinteren Teils 20 der Seitenwand 14 im Basisteil 10. Somit kann der Drehzapfen 30 nicht mehr in axialer Richtung aus dem Zapfenloch 24 herausgezogen werden.

Weiter im Inneren, d.h. am freien Ende des Drehzapfens ist der Auflagerzapfen 61 ausgebildet.

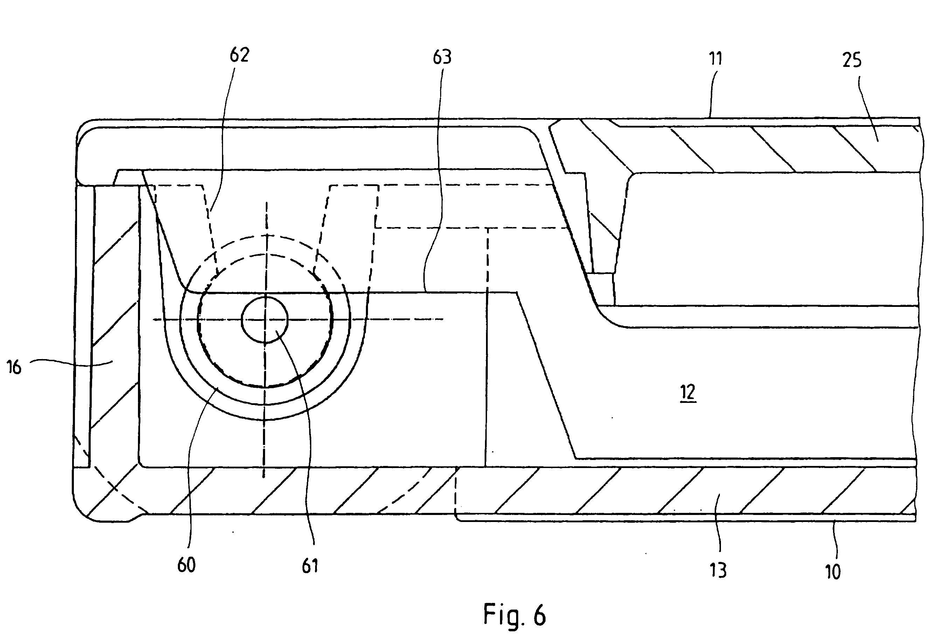

Insbesondere die Vergrößerung des Gelenkteils gemäß Fig. 5b, wie sie in Fig. 6 gezeigt ist, läßt erkennen, wie der Plattenteller 12 mit einer daran ausgebildeten Auflagerkante 63 auf den Auflagerzapfen 61 aufliegt. Es ist somit auch nicht mehr möglich, den Drehzapfen durch den Einschubschlitz 62 aus dem Zapfenloch herauszudrücken, wenn die Kassette geschlossen ist. Dies ist nur dann möglich, wenn die Kassette 1 geöffnet, d.h. der Deckel 11 relativ zum Basisteil 10 um wenigstens 90° verschwenkt und zusätzlich der Plattenteller 12 angehoben sind.

Mit dem nach der Erfindung gebildeten Ausführungsbeispiel ist ein Öffnen der CD-Kassette nicht möglich, wenn diese verschlossen ist. Erst recht wenn eine Sicherungsbanderole um die Kassette gelegt ist, ist eine Trennung vom Deckel und Basisteil im Bereich des Drehzapfens ohne ernsthafte Zerstörung dieses Teils nicht mehr möglich. Damit ist ein unerwünschter Austausch oder eine unerlaubte Entnahme der CDs ausgeschlossen.

### Bezugszeichenliste

- 1: Kassette
- 2: Originalitätssicherung
- 10: Basisteil
- 11: Deckel
- 12: Plattenhalter-Teller
- 13: Boden
- 14: Seitenwand
- 15: Stirnwand
- 16: Rückwand
- 17: Ausschnitt
- 18: Verstärkungsrippe
- 19: vorderes Ende
- 20: hinteres Ende
- 21: Erhöhung (neben dem Ausschnitt 17)
- 22: Öffnung
- 23: Gelenköffnung
- 24: Zapfenloch
- 25: obere Wand
- 26: Seitenwand
- 27: Ausschnitt
- 28: Verstärkungsrippe
- 29: Arm
- 30: Drehzapfen
- 31: Streifen, Stirnwand
- 32: Lasche
- 33: Streifen
- 34: Vorsprung
- 35: Tafel
- 36: seitlicher Vorsprung
- 37: (versetzter) Streifen
- 40: Seitenrippe (vordere Verstärkungsrippe)
- 41: Rippe
- 42: Seitenrippe (hintere Verstärkungsrippe)
- 43: Verbreiterung
- 44: Drehzapfen
- 48: obere Verstärkungsrippe
- 49: Vorsprung
- 50: Vorsprung
- 54: Mittelloch
- 55: Wulst, Abstützrippe
- 57: Rastzähne
- 60: konzentrische Scheibe
- 61: Auflagerzapfen
- 62: Einschubschlitz
- 63: Auflagerkante
- 70: Flügel, Streben
- 71: waagerechter Rand
- 72: Schrägrand
- 73: Vorsprung
- 74: Flügel

## Patentansprüche

1. Kassette für Datenträgerplatten mit den folgenden Merkmalen:
a) einem Gehäuse zur Unterbringung von zwei Datenträgerplatten, welches sich aus einem Basisteil (10) und einem Deckel (11) zusammensetzt, die jeweils eine im wesentlichen flache, rechteckige Grundplatte (13,25) aufweisen, an deren seitlichen Rändern Seitenwände (14,15,26) angeordnet sind,
b) einem über einen Drehzapfen (44) mit dem Basisteil (10) verbundenen, anhebbar in dem Gehäuse angeordneten Plattenhalter-Teller (12),
c) einer Deckel (11) und Basisteil (10) schwenkbar zueinander verbindenden Schwenkachse, die dadurch gebildet ist, daß an gegenüberliegenden Seitenwänden (26) des Basisteils (10) oder des Deckels (11) Drehzapfen (30) ausgebildet sind, welche in Zapfenlöcher (24) eingreifen, die in den entsprechenden Seitenwänden (14) am jeweils anderen Teil ausgebildet sind,
d) die Länge des Deckel (11) und Basisteil (10) verbindenden Drehzapfens (30) ist größer als die Dicke der das Zapfenloch (24) aufweisenden Seitenwand,
e) am freien Ende des Drehzapfens (30) ist eine radiale Vergrößerung (60) ausgebildet, deren Durchmesser größer ist als der des Zapfenlochs (24),
f) von der freien Oberkante der das Zapfenloch (24) aufnehmenden Seitenwand (14) bis zum Zapfenloch (24) ist ein Einschubschlitz (62) für den Drehzapfen (30) angeordnet.

2. Kassette nach Anspruch 1, dadurch gekennzeichnet, daß der Einschubschlitz (62) im wesentlichen V-förmig, sich zum Zapfenloch (24) hin verjüngend ausgebildet ist.

3. Kassette nach einem der vorangehenden Ansprüche, dadurch gekennzeichnet, daß die radiale Vergrößerung eine konzentrische Scheibe (60) ist.

4. Kassette nach einem der vorhergehenden Ansprüche, dadurch gekennzeichnet, daß der Drehzapfen (30) an dem freien Ende hinter der radialen Vergrößerung einen Auflagerzapfen (61) aufweist.

5. Kassette nach Anspruch 4, dadurch gekennzeichnet, daß der Plattenteller (12) bei verschlossener Kassette mit einer Auflagerkante (63) auf dem Auflagerzapfen (61) aufliegt.

## Claims

1. Case for data media disks having the following features:
a) a housing for accommodating two data media disks, which is composed of a base part (10) and a cover (11) which each have an essentially flat, rectangular base plate (13, 25) on whose side edges side walls (14, 15, 26) are arranged,
b) a disk holder plate (12) which is connected to the base part (10) via a rotating spindle (44) and is arranged such that it can be raised in the housing,
c) a pivoting shaft which connects the cover (11) and the base part (10) to one another such that they can pivot and is formed in such a manner that rotating spindles (30) are formed on opposite side walls (26) of the base part (10) or of the cover (11) and engage in spindle holes (24) which are formed in the corresponding side walls (14) on the respective other part,
d) the length of the rotating spindle (30) which connects the cover (11) and the base part (10) is greater than the thickness of the side wall which has the spindle hole (24),
e) a radial enlargement (60), whose diameter is greater than that of the spindle hole (24), is formed at the free end of the rotating spindle (30),
f) an insertion slot (62) for the rotating spindle (30) is arranged from the free upper edge of the side wall (14), which holds the spindle hole (24), to the spindle hole (24).

2. Case according to Claim 1, characterized in that the insertion slot (62) is designed essentially in a V-shape, tapering towards the spindle hole (24).

3. Case according to one of the preceding claims, characterized in that the radial enlargement is a concentric disc (60).

4. Case according to one of the preceding claims, characterized in that the rotating spindle (30) has a bearing spindle (61) at the free end, behind the radial enlargement.

5. Case according to Claim 4, characterized in that the disk plate (12) has a bearing edge (63) which rests on the bearing spindle (61) when the case is closed.

## Revendications

1. Coffret pour disques formant supports de données caractérisé par :
a) un boîtier pour loger deux disques formant supports de données, qui se compose d'une pièce de base (10) et d'un couvercle (11) qui comportent chacun une plaque de base (13, 25) sensiblement plane et rectangulaire aux bords de laquelle sont disposées des parois latérales (14, 15, 26),
b) un plateau de support de disques (12) relié à la pièce de base (10) par l'intermédiaire d'un pivot (44), et disposé dans le boîtier de manière à pouvoir être soulevé,
c) un axe de pivotement reliant le couvercle (11) et la pièce de base (10) de manière qu'ils puissent pivoter l'un par rapport à l'autre et qui est formé par des pivots (30) réalisés sur des parois latérales opposées (26) de la pièce de base (10) ou du couvercle (11) et rentrant dans des trous de pivot (24) qui sont réalisés sur les parois latérales correspondantes (14) situées à chaque fois sur l'autre pièce,
d) la longueur du pivot (30) reliant le couvercle (11) et la pièce de base (10) qui est supérieure à la largeur de la paroi latérale munie du trou de pivot (24),
e) un élargissement radial (60), dont le diamètre est supérieur à celui du trou de pivot (24) qui est réalisé à l'extrémité libre du pivot (30),
f) une fente d'insertion (62) destinée au pivot (30) qui est aménagée depuis l'arête supérieure libre de la paroi latérale (14) dans laquelle se trouve le trou de pivot (24) jusqu'au trou de pivot (24).

2. Coffret selon la revendication 1, caractérisé en ce que la fente d'insertion (62) est sensiblement réalisée en forme de V en se rétrécissant en direction du trou de pivot (24).

3. Coffret selon l'une des revendications précédentes, caractérisé en ce que l'élargissement radial est une rondelle concentrique (60).

4. Coffret selon l'une des revendications précédentes, caractérisé en ce que le pivot (30) comporte un tourillon d'appui (61) à l'extrémité libre derrière l'élargissement radial.

5. Coffret selon la revendication 4, caractérisé en ce qu'une arête d'appui (63) du plateau à disques (12) prend appui sur le tourillon d'appui (61) lorsque le coffret est fermé.
